# EUROPEAN PATENT SPECIFICATION

(11) **EP 4 223 728 B1**
(45) Date of publication and mention of the grant of the patent: **29.10.2025**
(21) Application number: 21875758.1
(22) Date of filing: 30.09.2021
(51) Int. Cl.: C06B 31/00, C06B 43/00, C06D 5/06, B60R 21/264, C06B 23/00

(54) **GAS-GENERATING AGENT COMPOSITION**
GASERZEUGENDE ZUSAMMENSETZUNG
COMPOSITION D'AGENT DE GÉNÉRATION DE GAZ

(30) Priority: 01.10.2020 JP 2020166757; 14.04.2021 JP 2021068270
(43) Date of publication of application: 09.08.2023
(73) Proprietor: Daicel Corporation, Osaka 530-0011 (JP)
(72) Inventor: FUJISAKI, Youji, Tokyo 108-8230 (JP); FUJINO, Ayumi, Tokyo 108-8230 (JP); NAKAI, Shunji, Tokyo 108-8230 (JP)
(74) Representative: Grünecker Patent- und Rechtsanwälte PartG mbB
(86) International application number: PCT/JP2021/036040
(87) International publication number: WO 2022/071462

(56) References cited:
- JP-A- 2006 290 699
- JP-A- 2007 046 889
- JP-A- 2009 073 676
- JP-A- 2010 269 969
- JP-A- 2020 514 218
- US-A- 3 862 866

## Description

### Technical Field

The present invention relates to a gas-generating agent composition.

### Background Art

In an inflator using a gas-generating agent composition, which is used in a vehicle safety device such as an airbag device mounted on a vehicle, an attempt is being made to ensure the reliability of the product. For example, an attempt is being made to lower the burning temperature of a gas-generating agent composition, improve the ignitability, and reduce the pressure index (Patent Document 1). It is known that the burn rate of a gas-generating agent composition varies in a range of the power of a pressure exponent n as expressed by the following equation due to the pressure variation in the inflator.

The invention disclosed in Patent Document 1 solves the issue by setting a ratio between melamine cyanurate and nitroguanidine in a specific range as a solution. Patent Document 2 discloses a deflagrating composition yielding a gas comprising carbon dioxide and water vapor comprising a substantially homogeneous mixture of powders preferably having an average particle size less than about 25 µm. The composition has an oxygen bearing oxidizing powder and an organic reducing powder having the formula CₓH_{y}O_{z}, having a melting point greater than about 74 °C.

Patent Document 3 discloses a gas generating composition comprising guanidine nitrate, a basic metal nitrate, a binder and basic magnesium carbonate.

### Citation List

### Patent Document

[Patent Document 1] JP 2012-211064 A
[Patent Document 2] US 3862866 A
[Patent Document 3] JP 2009-073676 A

### Summary of Invention

### Technical Problem

Burn rate is one of the properties of a gas-generating agent composition. When a gas-generating agent composition has a low burn rate, it may be necessary for the shape of the gas-generating agent composition to be made small when molded to compensate for its disadvantage. When the shape of the gas-generating agent composition at the time of molding is made small, a production process may become complicated. Also, a gas-generating agent composition having a low burn rate cannot be used as a gas generating agent for an inflator which may require early deployment. In addition, a gas-generating agent composition is desirable to have good ignitability.

In view of the above, an object of the present invention is to provide a gas-generating agent composition having a high burn rate and good ignitability.

### Solution to Problem

As a result of intensive studies to solve the above issues, the present inventors have found that a gas-generating agent composition having a high burn rate and a short ignition time can be obtained by using a basic magnesium carbonate as an additive for the gas-generating agent composition with an average particle size in a predetermined range.

In particular, it has been found that, in a gas-generating agent composition containing guanidine nitrate as a fuel and a basic metal nitrate as an oxidizing agent, the burn rate of the gas-generating agent composition increases when basic magnesium carbonate is added. In addition, it has been found that when the average particle size of the basic magnesium carbonate in the gas-generating agent composition is within a predetermined range, the gas-generating agent composition has a high burn rate and good ignitability. In the present specification, good ignitability is synonymous with short ignition time.

The present invention concerns the following contents:
[1] A gas-generating agent composition comprising components (a) to (d) below, wherein an average particle size of the following component (d) basic magnesium carbonate is 12 µm or less:
   (a) guanidine nitrate;
   (b) a basic metal nitrate;
   (c) a binder; and
   (d) basic magnesium carbonate.
[2] The gas-generating agent composition according to [1], wherein
   a content of (a) the guanidine nitrate is 20 mass% or more and 60 mass% or less,
   a content of (b) the basic metal nitrate is 35 mass% or more and 75 mass% or less,
   a content of (c) the binder is 0.1 mass% or more and 10 mass% or less, and
   a content of (d) the basic magnesium carbonate is 6 mass% or less.
[3] The gas-generating agent composition according to [1] or [2], wherein (b) the basic metal nitrate is basic copper nitrate, and (c) the binder is carboxymethyl cellulose.
[4] The gas-generating agent composition according to any one of [1] to [3], wherein a content of (d) the basic magnesium carbonate is 0.1 mass% or more and 11 mass% or less.
[5] An inflator comprising the gas-generating agent composition according to any one of [1] to [4].

### Advantageous Effects of Invention

According to an embodiment of the present disclosure, a gas-generating agent composition having a high burn rate and good ignitability can be provided.

### Brief Description of Drawings

FIG. 1 is a chart illustrating a relationship between the basic magnesium carbonate content and the burn rate of a gas-generating agent composition after molding.
FIG. 2 is a chart illustrating a relationship between the basic magnesium carbonate content and the ignition time of a gas-generating agent composition after molding.
FIG. 3 is a chart illustrating a relationship between the average particle size of basic magnesium carbonate and the burn rate of a gas-generating agent composition after molding.
FIG. 4 is a chart illustrating a relationship between the average particle size of basic magnesium carbonate and the ignition time of a gas-generating agent composition after molding.
FIG. 5 is a chart illustrating the relationship between the basic magnesium carbonate content having an average particle size of 12 µm or 13 µm and the burn rate of a gas-generating agent composition after molding.
FIG. 6 is a chart illustrating the relationship between the basic magnesium carbonate content having an average particle size of 12 µm or 13 µm and the ignition time of a gas-generating agent composition after molding.

### Description of Embodiments

Hereinafter, an embodiment of the present disclosure will be described.

### (a) Fuel

A fuel, which is a component (a) according to the invention, comprises guanidine nitrate. Since guanidine nitrate contains oxygen in the molecule, there are advantages such as reducing a blending amount for an oxidizing agent component, obtaining good thermal stability, reducing costs, and being able to expect a high gasification rate during combustion.

In the present disclosure, the guanidine nitrate is preferably in the form of powder or granules because it is easy to handle, and the lower limit of the 50% particle size is usually 5 µm or more, and 10 µm or more in a preferred embodiment, and the upper limit is usually 80 µm or less, and 50 µm or less in a preferred embodiment. If the 50% particle size of guanidine nitrate is excessively large, the strength of the molded article of the gas-generating agent composition is lowered, whereas if it is excessively small, the cost of pulverization would be high. In the present disclosure, the 50% particle size means a 50% particle size based on the number of measured particles, which can be determined by, for example, a laser diffraction/scattering method.

The lower limit of the content percentage (blending ratio) of guanidine nitrate in the gas-generating agent composition according to an embodiment of the present disclosure is usually 20 mass% or more, and 30 mass% or more in a preferred embodiment, and the upper limit is usually 60 mass% or less, and 55 mass% or less in a preferred embodiment. When the content percentage (blending ratio) of guanidine nitrate is less than 20 mass%, the number of moles of generated gas per 100 g of the gas-generating agent composition decreases, and the generation of nitrogen oxides tends to increase due to excess oxygen. Meanwhile, when the content percentage (blending ratio) of guanidine nitrate exceeds 60 mass%, the amount of the oxidizing agent component becomes insufficient, so that an amount of harmful carbon monoxide to be generated tends to be large.

Further, other known fuels may be included within such a range that the issues of the present invention can be solved.

Examples of those other known fuels include one or more selected from tetrazole compounds including 5-aminotetrazole and bitetrazole ammonium salts; guanidine compounds including guanidine nitrate and dicyandiamide (excluding nitroguanidine); and triazine compounds including melamine, trimethylolmelamine, alkylated methylolmelamine, ammeline, ammeland, melamine nitrate, melamine perchlorate, trihydrazinotriazine, and melamine nitrated compounds.

### (b) Oxidizing agent

The oxidizing agent, which is the component (b) according to the invention, includes a basic metal nitrate and optionally other oxidizing agents. By using a basic metal nitrate as the component (b), the burning temperature can be lowered.

Examples of the basic metal nitrate include one or more selected from basic copper nitrate, basic cobalt nitrate, basic zinc nitrate, and basic manganese nitrate, and among them, basic copper nitrate is preferable. Examples of the other oxidizing agents include metal nitrate, ammonium nitrate, metal perchlorate, ammonium perchlorate, metal nitrite, and metal chlorate.

The oxidizing agent content is usually in a range of 35 mass% or more and 75 mass% or less with respect to the gas-generating agent composition in a preferred embodiment, and is more preferably set in a range of 40 mass% or more and 75 mass% or less in another preferred embodiment in order to reduce the concentrations of carbon monoxide and nitrogen oxide in the generated gas.

### (c) Binder

Examples of the binder for the component (c) according to the invention include one or more selected from carboxymethyl cellulose (CMC), a carboxymethyl cellulose sodium salt (CMCNa), a carboxymethyl cellulose potassium salt, a carboxymethyl cellulose ammonium salt, cellulose acetate, cellulose acetate butyrate (CAB), ethylcellulose (EC), hydroxyethylcellulose (HEC), microcrystalline cellulose, polyacrylhydrazide, an acrylamide-acrylic acid metal salt copolymer, a polyacrylamide-polyacrylic acid ester compound copolymer, acrylic rubber, and silicone. Among these, a CMCNa is preferable.

The lower limit of the content of the binder as the component (c) in the gas-generating agent composition according to an embodiment of the present disclosure is usually 0.1 mass% or more, and 1 mass% or more in a preferred embodiment, and the upper limit is usually 10 mass% or less, and 8 mass% or less in a preferred embodiment.

### (d) Basic magnesium carbonate

Basic magnesium carbonate as the component (d) according to the invention is added to ensure a high burn rate of the gas-generating agent composition.

The content of (d) the basic magnesium carbonate in the gas-generating agent composition according to an embodiment of the present disclosure is 11 mass% or less in a preferred embodiment, 10 mass% or less in another preferred embodiment, 6 mass% or less in another preferred embodiment, less than 5 mass% in another preferred embodiment, and less than 2 mass% in still another preferred embodiment.

At the time of the combustion of the gas generating agent, the base from the basic magnesium carbonate promotes the rate-determining process of the combustion reaction, thereby improving the ignitability. In particular, since the pH of the entire gas-generating agent composition can be controlled even with a relatively small amount of basic magnesium carbonate, a sufficient effect can be obtained even with a content of, for example, 6 mass% or less.

Meanwhile, when the content of the basic magnesium carbonate is more than 11 mass%, the burn rate and ignitability of the gas-generating agent composition may decrease.

Meanwhile, from the viewpoint of maintaining good ignitability of the gas-generating agent composition, the content of the basic magnesium carbonate is 0.1 mass% or more in a preferred embodiment.

For the basic magnesium carbonate according to an embodiment of the present disclosure, a commercially available product can be used.

The average particle size of the basic magnesium carbonate according to the invention 12 µm or less. In a further preferred embodiment, it is 11 µm or less. In order to stably obtain the effect of improving ignitability even when the amount of the basic magnesium carbonate is small at the time of scale-up, it is necessary to increase the contact between the fuel and the oxidizing agent and the basic magnesium carbonate. Therefore, by having an average particle size of 12 µm or less, which is equal to or less than the average particle size of the fuel and the oxidizing agent, the ignitability of the gas-generating agent composition, particularly the ignitability in a low temperature environment, is improved. Meanwhile, the average particle size of the basic magnesium carbonate is usually 5 µm or more, and 8 µm or more in a preferred embodiment.

The combustion of the gas-generating agent composition is easily affected by the external environment, and in general, in a low temperature environment, ignition and combustion continuation are disadvantageous as compared with normal temperature and high temperature. In order to reduce the difference in performance depending upon the temperature, it is important to improve the ignitability in a low-temperature environment.

The average particle size of the basic magnesium carbonate can be measured by a particle size distribution measuring apparatus utilizing a laser diffraction/scattering method. Specifically, it can be measured using a precision particle size distribution measuring apparatus (Microtrac HRA, 3000 II manufactured by MicrotracBEL Corp., and the like).

The average particle size of the basic magnesium carbonate can be adjusted by controlling the initial concentration of the magnesium hydroxide used as a starting material and the reaction temperature when the basic magnesium carbonate is obtained by reactive crystallization by a carbonation method.

### (e) Other components

The gas-generating agent composition according to an embodiment of the present disclosure can include various known additives for the purpose of adjusting the burn rate of the gas-generating agent composition and cleaning the combustion gas within a range in which the issues of the present invention can be solved. Examples of those known additives include metal oxides such as cupric oxide, iron oxide, zinc oxide, cobalt oxide, manganese oxide, molybdenum oxide, nickel oxide, bismuth oxide, silica, and alumina; metal hydroxides such as aluminum hydroxide, magnesium hydroxide, cobalt hydroxide, and iron hydroxide; cobalt carbonate and calcium carbonate; complex compounds of metal oxide or hydroxide such as acid clay, kaolin, talc, bentonite and diatomaceous earth; metal acid salts such as sodium silicate, mica molybdate, cobalt molybdate, and ammonium molybdate; molybdenum disulfide, calcium stearate, silicon nitride, silicon carbide, metaboric acid, boric acid, boric anhydride, and glass.

The gas-generating agent composition according to an embodiment of the present disclosure may be substantially free of phosphate. The phrase "substantially free of phosphate" means that the content of phosphate in the gas-generating agent composition is not more than the detection limit.

Examples of the phosphate referred to herein include potassium dihydrogen phosphate, potassium monohydrogen phosphate, potassium tertiary phosphate, sodium dihydrogen phosphate, sodium monohydrogen phosphate, sodium tertiary phosphate, calcium dihydrogen phosphate, calcium monohydrogen phosphate, calcium tertiary phosphate, magnesium dihydrogen phosphate, magnesium monohydrogen phosphate, magnesium tertiary phosphate, ammonium dihydrogen phosphate, ammonium monohydrogen phosphate, and ammonium magnesium phosphate.

Even if the gas-generating agent composition according to an embodiment of the present disclosure does not contain phosphate, the burning temperature does not become higher than necessary. In addition, when the gas-generating agent composition according to an embodiment of the present disclosure does not contain phosphate, ignitability at a low temperature is improved.

The gas-generating agent composition according to an embodiment of the present disclosure can be molded into a desired shape, and can be molded into a single-hole cylindrical shape, a porous cylindrical shape, or a pellet-like molded article. These molded articles can be produced by a method in which water or an organic solvent is added to and mixed with the gas-generating agent composition and a mixture is subjected to extrusion molding (molded articles having a single-hole cylindrical shape or a porous cylindrical shape) or compression molding using a tableting machine or the like (molded articles in the molded article of pellets).

Since the gas-generating agent composition according to an embodiment of the present disclosure has a high burn rate, it is not necessary to make the molded article small, and the manufacturing process does not become complicated.

The gas-generating agent composition according to an embodiment of the present disclosure or the molded article obtained therefrom can be applied to, for example, an inflator for a driver's seat airbag, an inflator for a front passenger seat airbag, an inflator for a side airbag, an inflator for an inflatable curtain, an inflator for a knee bolster, an inflator for an inflatable seat belt, an inflator for a tubular system, and an inflator for a pretensioner of various vehicles. The gas-generating agent composition according to an embodiment of the present disclosure or a molded article obtained therefrom can be preferably applied to an inflator for a side airbag, which may require early deployment, among these.

In addition, the inflator including: the gas-generating agent composition according to an embodiment of the present disclosure; or the molded article obtained therefrom may be either a pyrotechnic type in which the gas is supplied only from the gas-generating agent or a hybrid type in which the gas is supplied from both a compressed gas such as argon and the gas generating agent.

The gas-generating agent composition according to an embodiment of the present disclosure or a molded article obtained therefrom can also be used as an ignition agent called an enhancer agent (or booster) or the like for transmitting energy of a detonator or squib to a gas generating agent.

Each of the configurations, combinations thereof, and the like in each embodiment are an example, and various additions, omissions, substitutions, and other changes may be made as appropriate without departing from the scope of the present invention as defined in the claims. The present disclosure is not limited by the embodiments and is limited only by the claims.

### Examples

Hereinafter, the present disclosure will be specifically described with reference to examples. However, the present disclosure is not limited to the embodiments in the following examples.

### Preparation of gas-generating agent composition

A gas-generating agent composition before molding having the composition listed in Table 1 was prepared.

**[Table 1]**

| Sample | (a) Guanidine nitrate (mass%) | (b) Basic copper nitrate (mass%) | (c) Binder (mass%) | (d) Basic magnesium carbonate (mass%) | (e) Additives: Aluminum hydroxide, glass (5:1 w:w) (mass%) | Burn rate (mm/sec) | | | Ignition time (msec) | |
|---|---|---|---|---|---|---|---|---|---|---|
| | | | | | | 5 MPa | 7 MPa | 9 MPa | Low temperature | Normal temperature |
| Example 1 | 38.6 | 47.4 | 5.0 | 3.0 | 6.0 | 12.6 | 13.6 | 14.4 | 11.5 | 9.9 |
| Comparative Example 1 | 38.6 | 47.4 | 5.0 | 3.0 | 6.0 | 14.0 | 15.0 | 15.8 | 13.0 | 14.0 |
| Comparative Example 2 | 38.6 | 47.4 | 5.0 | - | 9.0 | 13.7 | 14.8 | 15.6 | 36.0 | 33.5 |

| | | | | | | | | | | |
|---|---|---|---|---|---|---|---|---|---|---|
| * The binder is carboxymethyl cellulose. ** Average particle size of the basic magnesium carbonate of Example 1: 10 µm, Average particle size of the basic magnesium carbonate of Comparative Example 1: 14 µm | | | | | | | | | | |

### Molding into cylindrical strand

Water was added and mixed with each of the gas-generating agent compositions of examples and comparative examples listed in Table 1, and the mixture was subjected to extrusion molding, cutting, and drying to obtain a single-hole molded article.

The obtained single-hole molded article was ground in an agate mortar, and the powder passed through a wire mesh having an opening of 500 µm was filled in a mortar side of a predetermined mold.

Next, a punch-side end surface was compressed and held at a pressure of 14.7 MPa for 5 seconds by a hydraulic pump, and then taken out and molded into a cylindrical strand having an outer diameter of 9.6 ± 0.1 mm and a length of 12.7 ± 1.0 mm to obtain a gas-generating agent composition after molding.

### Method for measuring burn rate

The cylindrical strand as a sample was placed in an SUS-made closed bomb having an inner volume of 1 L, and the inside of the bomb was completely substituted with nitrogen gas while the pressure was stabilized to the 5 MPa, 7 MPa, or 9 MPa. Thereafter, a predetermined electric current was passed through the nichrome wire in contact with the end face of the strand, and the wire was ignited and fired by the fusing energy. The pressure behavior with time in the bomb was confirmed by a chart of a recorder, the elapsed time from the start of combustion to the pressure rise peak was confirmed from the scale of the chart, and the value calculated by dividing the strand length before combustion by this elapsed time was taken as the burn rate. The results of the examples and comparative examples are listed in Table 1.

### Method for measuring ignition time

A predetermined amount of a gas generating agent for evaluation of a single-hole molded article obtained by extrusion molding was charged into a 5 cc bomb test jig, and ignited with an ignition chemical containing ZPP at 26°C under a low temperature environment (-35°C) or a normal temperature environment, and the time when the gas generating agent reached 10% of the maximum pressure was defined as an ignition time.

From the comparison of the results from Example 1, Comparative Example 1, and Comparative Example 2 in Table 1, it was found that when basic magnesium carbonate was added to the gas-generating agent composition, the burn rate was increased and the ignition time was shortened.

When the results of Example 1 and Comparative Example 1 were compared, it was found that, when the average particle size of the basic magnesium carbonate was 12 µm or less, the burn rate of the gas-generating agent composition was high and the ignition time was short.

### Burn rate and ignition time when the basic magnesium carbonate content is changed

A gas-generating agent composition before molding having the composition listed in Table 2 was prepared. The preparation method is the same as that of the gas-generating agent composition of Table 1. The materials used were the same as those listed in Table 1, and the average particle size of the basic magnesium carbonate was 10 µm. These gas-generating agent compositions before molding were molded into cylindrical strands in the same manner as in Example 1 and the like to obtain gas-generating agent compositions after molding. For each gas-generating agent composition after molding, the burn rate and ignition time were measured by the above-mentioned methods. The results are listed in Table 2.

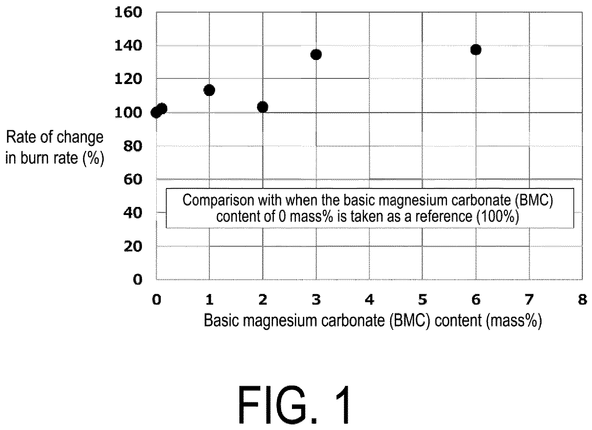

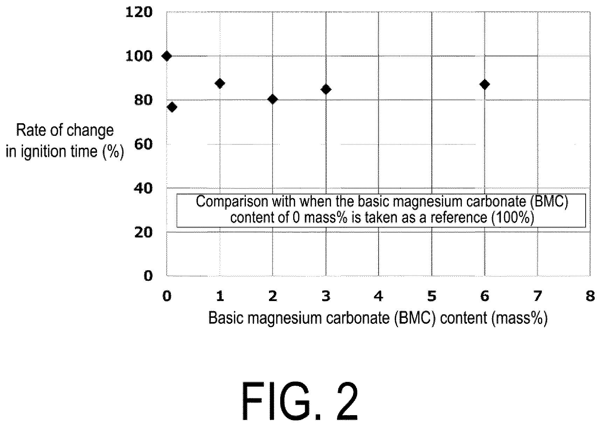

The burn rate and the ignition time are listed as ratios (%) to the burn rate (mm/sec) and the ignition time (msec) of Comparative Example 3, respectively. Further, the results from Examples 2 to 6 and Comparative Example 3 are summarized in FIGS. 1 and 2. In FIG. 1, the horizontal axis represents the basic magnesium carbonate content, and the vertical axis represents the rate of change (%) in the burn rate from Comparative Example 3. In FIG. 2, the horizontal axis represents the basic magnesium carbonate content, and the vertical axis represents the rate of change (%) in the ignition time from Comparative Example 3.

**[Table 2]**

| Sample | (a) Guanidine nitrate (mass%) | (b) Basic copper nitrate (mass%) | (c) Binder (mass%) | (d) Basic magnesium carbonate (mass%) | Burn rate (mm/sec) (with respect to Comparative Example 3) 7 MPa | Ignition time (msec) (with respect to Comparative Example 3) Low temperature |
|---|---|---|---|---|---|---|
| Example 2 | 40.2 | 48.8 | 5 | 6 | 137.3% | 86.9% |
| Example 3 | 41.8 | 50.2 | 5 | 3 | 134.6% | 84.8% |
| Example 4 | 42.3 | 50.7 | 5 | 2 | 103.3% | 80.4% |
| Example 5 | 42.9 | 51.1 | 5 | 1 | 113.0% | 87.5% |
| Example 6 | 43.35 | 51.55 | 5 | 0.1 | 102.2% | 76.8% |
| Comparative Example 3 | 43.4 | 51.6 | 5 | 0 | 100.0% | 100.0% |

From the results listed in Table 2 and FIGS. 1 and 2, it was confirmed that the addition of basic magnesium carbonate increased the burn rate and significantly reduced the ignition time. Furthermore, when the content of the basic magnesium carbonate was 3 mass% or more, a significant increase in the burn rate was observed.

### Burn rate and ignition time when the average particle size of basic magnesium carbonate is changed

A gas-generating agent composition before molding having the composition listed in Table 3 was prepared. The preparation method is the same as that of the gas-generating agent composition of Table 1. Materials other than the basic magnesium carbonate were the same as those listed in Table 1, and the average particle size of the basic magnesium carbonate was changed. These gas-generating agent compositions before molding were molded into cylindrical strands in the same manner as in Example 1 and the like to obtain gas-generating agent compositions after molding. For each gas-generating agent composition after molding, the burn rate and ignition time were measured by the above-mentioned methods. The results are listed in Table 3.

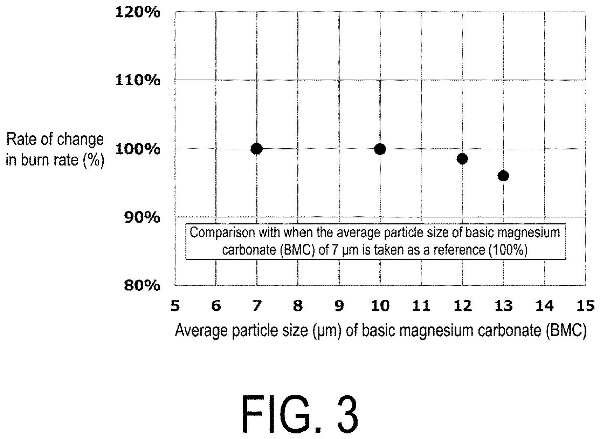

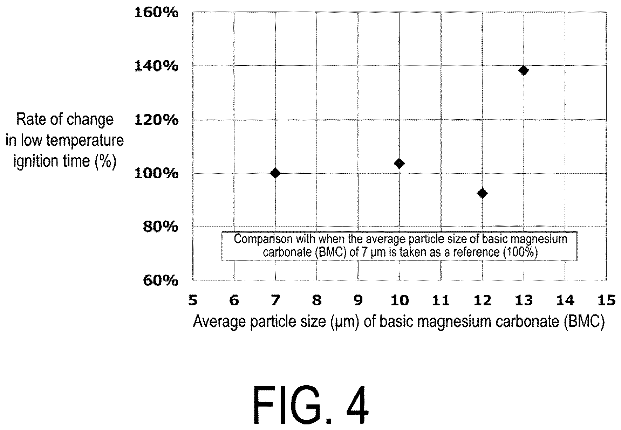

The burn rate and the ignition time are listed as ratios (%) to the burn rate (mm/sec) and the ignition time (msec) of Example 9, respectively. Further, the results of Examples 7 to 9 and Comparative Example 4 are summarized in FIGS. 3 and 4. In FIG. 3, the horizontal axis represents the average particle size (µm) of basic magnesium carbonate, and the vertical axis represents the rate of change (%) of the burn rate from Example 9. In FIG. 4, the horizontal axis represents the average particle size (µm) of basic magnesium carbonate, and the vertical axis represents the rate of change (%) of the ignition time from Example 9.

**[Table 3]**

| Sample | (a) Guanidine nitrate (mass%) | (b) Basic copper nitrate (mass%) | (c) Binder (mass%) | (d) Basic magnesium carbonate (mass%) | Average particle size of basic magnesium carbonate (µm) | Burn rate (mm/sec) (with respect to Example 9) 7 MPa | Ignition time (msec) (with respect to Example 9) Low temperature |
|---|---|---|---|---|---|---|---|
| Comparative Example 4 | 40.2 | 48.8 | 5 | 6 | 13 | 96% | 138% |
| Example 7 | 40.2 | 48.8 | 5 | 6 | 12 | 99% | 93% |
| Example 8 | 40.2 | 48.8 | 5 | 6 | 10 | 100% | 104% |
| Example 9 | 40.2 | 48.8 | 5 | 6 | 7 | 100% | 100% |

From the results of Table 3 and FIGS. 3 and 4, it was found that, when the average particle size of basic magnesium carbonate exceeds 12 µm, the burn rate rapidly decreases and the ignition time rapidly increases. Meanwhile, when the average particle size of the basic magnesium carbonate was 12 µm or less, a good burn rate and a short ignition time were exhibited in all cases.

### Burn rate and ignition time when the average particle size and the content of basic magnesium carbonate is changed

Basic magnesium carbonate having an average particle size of 12 µm and 13 µm was prepared, and the content of the basic magnesium carbonate in the gas-generating agent composition was adjusted to 0.1 mass%, 2 mass%, 6 mass%, 7 mass%, and 10 mass% to prepare gas-generating agent compositions before molding having the compositions listed in Table 4. The materials other than basic magnesium carbonate are the same as those listed in Table 1. These gas-generating agent compositions before molding were molded into cylindrical strands in the same manner as in Example 1 and the like to obtain gas-generating agent compositions after molding. For each gas-generating agent composition after molding, the burn rate and ignition time were measured by the above-mentioned methods. The results are listed in Table 4.

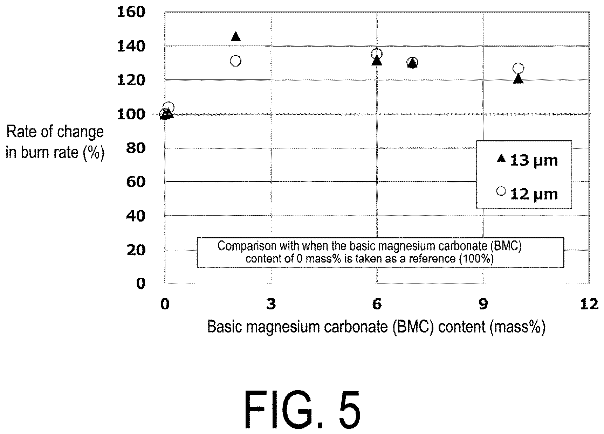

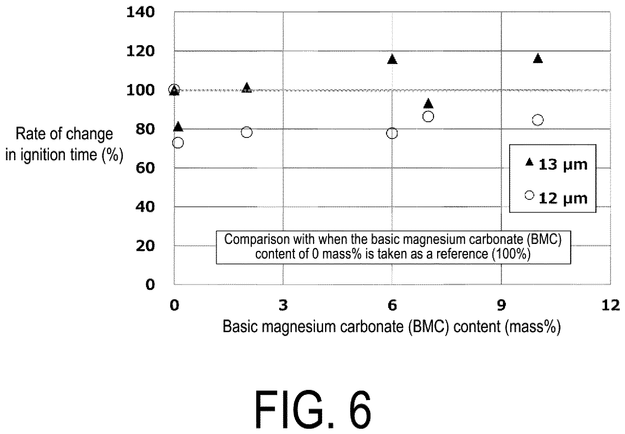

The burn rate and the ignition time are listed as ratios (%) to the burn rate (mm/sec) and the ignition time (msec) of Comparative Example 5, respectively. The results from Examples 10 to 14 and Comparative Examples 5 to 10 are summarized in FIGS. 5 and 6. In FIG. 5, the horizontal axis represents the basic magnesium carbonate content (mass%), and the vertical axis represents the rate of change (%) of the burn rate from Comparative Example 5. In FIG. 6, the horizontal axis represents the basic magnesium carbonate content (mass%), and the vertical axis represents the rate of change (%) of the ignition time from Comparative Example 5.

**[Table 4]**

| Sample | (a) Guanidine nitrate (mass%) | (b) Basic copper nitrate (mass%) | (c) Binder (mass%) | (d) Basic magnesium carbonate (mass%) | Average particle size of basic magnesium carbonate (µm) | Burn rate (mm/sec) (with respect to Comparative Example 5) 7 MPa | Ignition time (msec) (with respect to Comparative Example 5) Low temperature |
|---|---|---|---|---|---|---|---|
| Comparative Example 5 | 43.4 | 51.6 | 5 | 0 | - | 100% | 100% |
| Example 10 | 43.35 | 51.55 | 5 | 0.1 | 12 | 103.8% | 72.9% |
| Example 11 | 42.3 | 50.7 | 5 | 2 | 12 | 131.1% | 78.3% |
| Example 12 | 40.2 | 48.8 | 5 | 6 | 12 | 135.3% | 77.7% |
| Example 13 | 39.7 | 48.3 | 5 | 7 | 12 | 130.2% | 86.3% |
| Example 14 | 38.1 | 46.9 | 5 | 10 | 12 | 126.6% | 84.5% |
| Comparative Example 6 | 43.35 | 51.55 | 5 | 0.1 | 13 | 100.9% | 81.5% |
| Comparative Example 7 | 42.3 | 50.7 | 5 | 2 | 13 | 145.8% | 101.5% |
| Comparative Example 8 | 40.2 | 48.8 | 5 | 6 | 13 | 131.9% | 116.1% |
| Comparative Example 9 | 39.7 | 48.3 | 5 | 7 | 13 | 130.3% | 93.5% |
| Comparative Example 10 | 38.1 | 46.9 | 5 | 10 | 13 | 121.0% | 116.4% |

From the results listed in Table 4 and FIGS. 5 and 6, when basic magnesium carbonate having an average particle size of 12 µm was used, a good burn rate and a short ignition time were exhibited regardless of the content of the basic magnesium carbonate. Meanwhile, when basic magnesium carbonate having an average particle size of 13 µm was used, it was not possible to obtain a short ignition time depending on the content the basic magnesium carbonate.

From the results of Tables 1 to 3 and FIGS. 1 to 6, it was found that the use of basic magnesium carbonate having an average particle size of 12 µm or less in the gas-generating agent composition is an important factor for obtaining a good burn rate and a short ignition time.

### Industrial Applicability

According to the present disclosure, a gas-generating agent composition having a high burn rate and a short ignition time can be provided.

## Claims

1. A gas-generating agent composition comprising components (a) to (d) below, wherein an average particle size of the following component (d) basic magnesium carbonate is 12 µm or less:
(a) guanidine nitrate;
(b) a basic metal nitrate;
(c) a binder; and
(d) basic magnesium carbonate.

2. The gas-generating agent composition according to claim 1, wherein
a content of (a) the guanidine nitrate is 20 mass% or more and 60 mass% or less,
a content of (b) the basic metal nitrate is 35 mass% or more and 75 mass% or less,
a content of (c) the binder is 0.1 mass% or more and 10 mass% or less, and
a content of (d) the basic magnesium carbonate is 6 mass% or less.

3. The gas-generating agent composition according to claim 1 or 2, wherein (b) the basic metal nitrate is basic copper nitrate, and (c) the binder is carboxymethyl cellulose.

4. The gas-generating agent composition according to any one of claims 1 to 3, wherein a content of (d) the basic magnesium carbonate is 0.1 mass% or more and 11 mass% or less.

5. An inflator comprising the gas-generating agent composition according to any one of claims 1 to 4.

6. The gas-generating agent composition according to any one of claims 1 to 4, wherein the average particle size of the basic magnesium carbonate is 5 µm or more.

7. The gas-generating agent composition according to any one of claims 1 to 4 and 6, wherein a 50% particle size of the guanidine nitrate is 5 µm or more and 80 µm or less.

8. The gas-generating agent composition according to claim 7, wherein the 50% particle size of the guanidine nitrate is 10 µm or more and 50 µm or less.

9. The gas-generating agent composition according to any one of claims 1 to 4 and 6 to 8, further comprising:
at least one additive for the purpose of adjusting a burn rate of the gas-generating agent composition and cleaning a combustion gas, the at least one additive selected from the group consisting of
metal oxides such as cupric oxide, iron oxide, zinc oxide, cobalt oxide, manganese oxide, molybdenum oxide, nickel oxide, bismuth oxide, silica, and alumina,
metal hydroxides such as aluminum hydroxide, manganese hydroxide, cobalt hydroxide, iron hydroxide,
cobalt carbonate and calcium carbonate,
complex compounds of metal oxide or hydroxide such as acid clay, kaolin, talc, bentonite and diatomaceous earth,
metal acid salts such as sodium silicate, mica molybdate, cobalt molybdate, and ammonium molybdate, and
molybdenum disulfide, calcium stearate, silicon nitride, silicon carbide, metaboric acid, boric acid, boric anhydride, and glass; or combinations thereof.

10. The gas-generating agent composition according to any one of claims 1 to 4 and 6 to 9, wherein a content of phosphate in the gas-generating agent composition is not more than a detection limit.

## Patentansprüche

1. Gaserzeugungsmittelzusammensetzung, umfassend die nachstehenden Komponenten (a) bis (d), wobei eine durchschnittliche Partikelgröße der folgenden Komponente (d), basisches Magnesiumcarbonat ,12 µm oder weniger beträgt:
(a) Guanidinnitrat;
(b) basisches Metallnitrat;
(c) Bindemittel und
(d) basisches Magnesiumcarbonat.

2. Gaserzeugungsmittelzusammensetzung gemäß Anspruch 1, wobei ein Gehalt an (a) dem Guanidinnitrat 20 Massenprozent oder mehr und 60 Massenprozent oder weniger beträgt, ein Gehalt an (b) dem basischen Metallnitrat 35 Massenprozent oder mehr und 75 Massenprozent oder weniger beträgt, ein Gehalt an (c) dem Bindemittel 0,1 Massenprozent oder mehr und 10 Massenprozent oder weniger beträgt und ein Gehalt an (d) dem basischen Magnesiumcarbonat 6 Massenprozent oder weniger beträgt.

3. Gaserzeugungsmittelzusammensetzung gemäß Anspruch 1 oder 2, wobei (b) das basische Metallnitrat basisches Kupfernitrat ist und (c) das Bindemittel Carboxymethylcellulose ist.

4. Gaserzeugungsmittelzusammensetzung gemäß einem der Ansprüche 1 bis 3, wobei ein Gehalt an (d) dem basischen Magnesiumcarbonat 0,1 Massenprozent oder mehr und 11 Massenprozent oder weniger beträgt.

5. Gasgenerator, der die Gaserzeugungsmittelzusammensetzung gemäß einem der Ansprüche 1 bis 4 umfasst.

6. Gaserzeugungsmittelzusammensetzung gemäß einem der Ansprüche 1 bis 4, wobei die durchschnittliche Partikelgröße des basischen Magnesiumcarbonats 5 µm oder mehr beträgt.

7. Gaserzeugungsmittelzusammensetzung gemäß einem der Ansprüche 1 bis 4 und 6, wobei eine 50%-Partikelgröße des Guanidinnitrats 5 µm oder mehr und 80 µm oder weniger beträgt.

8. Gaserzeugungsmittelzusammensetzung gemäß Anspruch 7, wobei die 50%-Partikelgröße des Guanidinnitrats 10 µm oder mehr und 50 µm oder weniger beträgt.

9. Gaserzeugungsmittelzusammensetzung gemäß einem der Ansprüche 1 bis 4 und 6 bis 8, die ferner Folgendes umfasst:
mindestens ein Additiv zum Zweck des Einstellens der Verbrennungsrate der Gaserzeugungsmittelzusammensetzung und des Reinigens einsilicaes Verbrennungsgases, wobei das mindestens eine Additiv ausgewählt ist aus der Gruppe bestehend aus
Metalloxiden wie zum Beispiel Kupferoxid, Eisenoxid, Zinkoxid, Kobaltoxid, Manganoxid, Molybdänoxid, Nickeloxid, Wismutoxid, Kieselsäure und Aluminiumoxid,
Metallhydroxiden wie zum Beispiel Aluminiumhydroxid, Manganhydroxid, Kobalthydroxid, Eisenhydroxid,
Kobaltcarbonat und Calciumcarbonat,
komplexen Verbindungen von Metalloxiden oder -hydroxiden wie zum Beispiel saurem Ton, Kaolin, Talkum, Bentonit und Kieselgur,
Metallsäuresalzen wie Natriumsilikat, Glimmermolybdat, Kobaltmolybdat und Ammoniummolybdat und
Molybdändisulfid, Calciumstearat, Siliciumnitrid, Siliciumcarbid, Metaborsäure, Borsäureanhydrid und Glas; oder Kombinationen davon.

10. Gaserzeugungsmittelzusammensetzung gemäß einem der Ansprüche 1 bis 4 und 6 bis 9, wobei ein Phosphatgehalt in der Gaserzeugungsmittelzusammensetzung nicht mehr beträgt als eine Nachweisgrenze.

## Revendications

1. Composition d'agent générateur de gaz comprenant les composants (a) à (d) ci-dessous, dans laquelle une granulométrie moyenne du composant (d) suivant, carbonate de magnésium basique, est de 12 µm ou moins :
(a) du nitrate de guanidine ;
(b) un nitrate basique de métal ;
(c) un liant ; et
(d) du carbonate de magnésium basique.

2. Composition d'agent générateur de gaz selon la revendication 1, dans laquelle une teneur en (a) le nitrate de guanidine est de 20 % en masse ou plus et de 60 % en masse ou moins, une teneur en (b) le nitrate basique de métal est de 35 % en masse ou plus et de 75% en masse ou moins, une teneur en (c) le liant est de 0,1 % en masse ou plus et de 10 % en masse ou moins, et une teneur en (d) le carbonate de magnésium basique est de 6 % en masse ou moins.

3. Composition d'agent générateur de gaz selon la revendication 1 ou 2, dans laquelle (b) le nitrate basique de métal est du nitrate basique de cuivre, et (c) le liant est de la carboxyméthylcellulose.

4. Composition d'agent générateur de gaz selon l'une quelconque des revendications 1 à 3, dans laquelle une teneur en (d) le carbonate de magnésium basique est 0,1 % en masse ou plus et de 11 % en masse ou moins.

5. Gonfleur comprenant la composition d'agent générateur de gaz selon l'une quelconque des revendications 1 à 4.

6. Composition d'agent générateur de gaz selon l'une quelconque des revendications 1 à 4, dans laquelle la granulométrie moyenne du carbonate de magnésium basique est de 5 µm ou plus.

7. Composition d'agent générateur de gaz selon l'une quelconque des revendications 1 à 4 et 6, dans laquelle une granulométrie médiane D50 du nitrate de guanidine est de 5 µm ou plus et de 80 µm ou moins.

8. Composition d'agent générateur de gaz selon la revendication 7, dans laquelle la granulométrie médiane D50 du nitrate de guanidine est de 10 µm ou plus et de 50 µm ou moins.

9. Composition d'agent générateur de gaz selon l'une quelconque des revendications 1 à 4 et 6 à 8, comprenant en outre :
au moins un additif à des fins d'ajustement d'une vitesse de combustion de la composition d'agent générateur de gaz et de nettoyage d'un gaz de combustion, ledit au moins un additif étant choisi dans le groupe constitué par
des oxydes métalliques tels que l'oxyde cuivrique, l'oxyde de fer, l'oxyde de zinc, l'oxyde de cobalt, l'oxyde de manganèse, l'oxyde de molybdène, l'oxyde de nickel, l'oxyde de bismuth, la silice, et l'alumine,
des hydroxydes métalliques tels que l'hydroxyde d'aluminium, l'hydroxyde de manganèse, l'hydroxyde de cobalt, l'hydroxyde de fer,
le carbonate de cobalt et le carbonate de calcium,
des composés complexes d'oxyde ou d'hydroxyde métallique, tels que l'argile acide, le kaolin, le talc, la bentonite et la terre à diatomées,
des sels d'acides métalliques, tels que le silicate de sodium, le molybdate de mica, le molybdate de cobalt, et le molybdate d'ammonium, et
le disulfure de molybdène, le stéarate de calcium, le nitrure de silicium, le carbure de silicium, l'acide métaborique, l'acide borique, l'anhydride borique, et le verre ; ou des combinaisons de ceux-ci.

10. Composition d'agent générateur de gaz selon l'une quelconque des revendications 1 à 4 et 6 à 9, dans laquelle une teneur en phosphate dans la composition d'agent générateur de gaz n'est pas supérieure à une limite de détection.
